Europäisches Patentamt

European Patent Office

Office européen des brevets

(19)

(11) **EP 0 521 548 B1**

(12)

# FASCICULE DE BREVET EUROPEEN

(45) Date de publication et mention
de la délivrance du brevet:
**12.11.1997 Bulletin 1997/46**

(51) Int Cl.6: **G06F 15/80**

(21) Numéro de dépôt: **92201826.2**

(22) Date de dépôt: **22.06.1992**

(54) **Procédé et dispositif avec un réseau neuronal pour classer des données**

Neuronalnetzwerk-Anlage und -Verfahren für Datenklassifizierung

Neural network device and method for data classification

(84) Etats contractants désignés:
**DE FR GB IT**

(30) Priorité: **28.06.1991 FR 9108066**

(43) Date de publication de la demande:
**07.01.1993 Bulletin 1993/01**

(73) Titulaires:
- **LABORATOIRES D'ELECTRONIQUE PHILIPS
S.A.S.
94450 Limeil-Brévannes (FR)**
Etats contractants désignés:
**FR**
- **Philips Electronics N.V.
5621 BA Eindhoven (NL)**
Etats contractants désignés:
**DE GB IT**

(72) Inventeurs:
- **Minot, Joel
F-75008 Paris (FR)**
- **Gentric, Philippe
F-75008 Paris (FR)**

(74) Mandataire: **Caron, Jean et al
Société Civile S.P.I.D.
156, Boulevard Haussmann
75008 Paris (FR)**

(56) Documents cités:
- **INTERNATIONAL NEURAL NETWORK
CONFERENCE INNC-90 PARIS vol. 2, 9 Juillet
1990, PARIS,FRANCE pages 761 - 764
ALPAYDIN 'Grow-and-learn: an incremental
method for category learning'**
- **NETWORK- COMPUTATION IN NEURAL
SYSTEMS vol. 1, no. 3, Juillet 1990, BRISTOL,GB
pages 299 - 323 LOWE 'Exploiting prior
knowledge in network optimization: an
illustration from medical prognosis'**
- **COMMUNICATIONS OF THE ASSOCIATION FOR
COMPUTING MACHINERY. vol. 33, no. 11,
Novembre 1990, NEW YORK US pages 59 - 74
KNIGHT 'Connectionist ideas and algorithms'**
- **IJCNN INTERNATIONAL JOINT CONFERENCE
ON NEURAL NETWORKS 1990 vol. 3, 17 Juin
1990, SAN DIEGO,USA pages 193 - 197 FAHNER
'A higher order unit that performs arbitrary
boolean functions'**
- **IJCNN INTERNATIONAL JOINT CONFERENCE
ON NEURAL NETWORKS 1990 vol. 1, 17 Juin
1990, SAN DIEGO, USA pages 373 - 378 LUCAS
'signature verification with syntactic neural net'**

EP 0 521 548 B1

## Description

La présente invention concerne un procédé pour l'apprentissage d'un réseau de neurones, destiné au classement selon une ou plusieurs classes d'un signal inconnu présenté sous la forme d'un vecteur, réseau comportant au moins une couche d'entrée et une couche interne dont les neurones sont reliés d'une couche à l'autre par des connexions ayant chacune un poids, et une couche de sortie dont les neurones sont reliés par des connexions à ceux de la couche interne, l'apprentissage se faisant en créant de nouveau neurones sur la base de spécimens dont on connaît la classe.

Ce procédé permet l'apprentissage d'une ou de plusieurs classes pour ensuite estimer la probabilité qu'un vecteur de données appartienne à une ou à plusieurs classes parmi celles qui ont été apprises.

L'invention concerne aussi un dispositif pour classer des données présentées sous la forme de vecteurs, fournissant une valeur d'estimation de la probabilité qu'une donnée appartienne à une classe parmi une ou plusieurs classes apprises au moyen de spécimens d'apprentissage.

Un dispositif neuronal est connu par l'article de E. Alpaydin, intitulé : "Grow and Learn: An Incremental Method for Category Learning" INTERNATIONAL NEURAL NETWORK CONFERENCE INNC-PARIS", vol 2, 9 juillet 1990, PARIS, FRANCE, pages 761, 764. Ce document décrit une méthode d'apprentissage d'un réseau qui s'adapte au fur et à mesure que de nouveaux spécimens sont considérés. Il utilise une variante de la méthode des plus proches voisins. La manière de procéder pour adapter le réseau n'est pas décrite en détail, à l'exception d'une méthode pour corriger en final un excès de neurones inutiles qui auraient pu être introduits, du fait que l'apprentissage varie selon l'ordre dans lequel on prend les spécimens.

On considère un exemple à classer, exemple qui est défini par un ensemble de données, comme un "vecteur de données" dans un hyper-espace, vecteur dont les coordonnées sont les valeurs de données de l'exemple. On emploiera par la suite le mot "spécimen" pour désigner un vecteur de données particulier : celui qui définit un spécimen d'apprentissage. Le dispositif apprend à définir une classe lorsqu'on lui fournit des spécimens faisant partie de cette classe.

L'invention s'applique à l'authentification de signatures, mais il est clair qu'elle peut s'appliquer aussi, entre autres, à la reconnaissance de parole ou de caractères, et plus particulièrement encore dans les domaines où les données disponibles pour l'apprentissage du dispositif sont en petit nombre (fusion de données, détection de signal) ou quand se présente un problème de classement à une seule classe (tel que estimation de probabilité ou détection de signal dans le bruit) ou lorsqu'il y a évolution dans le temps (vieillissement).

Un des problèmes rencontrés dans l'authentification de signatures est que l'on ne dispose que d'une classe de spécimens : celle des signatures véritables. Il n'est donc pas évident de déterminer la frontière avec la classe des signatures contrefaites pour lesquelles on n'a pas de spécimen. L'invention fournit un procédé qui résout ce problème et qui peut être mis en oeuvre dans un dispositif neuronal simple à plusieurs couches du type dit MLP (Multi Layer Perceptron).

Ce but est atteint du fait que le procédé comprend les étapes décrites par la revendication 1.

Ce mécanisme d'apprentissage n'est pas itératif et il est donc très rapide, un apprentissage incrémental est possible (le système peut "apprendre" des spécimens supplémentaires sans avoir à reprendre tout son apprentissage antérieur), et il procure une fiabilité de classement supérieure à celle de l'art antérieur.

Le procédé peut comprendre une étape dans laquelle un neurone est ajouté à la couche de sortie, correspondant à une classe à laquelle est attaché un groupe de neurones de la couche intermédiaire.

L'étape c) comprend de préférence la détermination de la matrice de covariance des k plus proches voisins, d'un centroïde de la distribution, et des axes principaux d'un ellipsoïde représentant chaque domaine de décision.

Les poids étant représentés par $a_{ij}$ $b_i$ dans l'équation :

$$\Sigma_{ij} \, x_i \, a_{ij} \, x_j + \Sigma_i \, x_i \, b_i \, -c < S$$

où S est un coefficient prédéterminé qui exprime le volume du domaine de décision considéré, les coefficients $a_{ij}$ $b_i$ et c sont déterminés par identification entre cette équation et la relation : $(X - \mu)^T \, \Gamma^{-1} \, (X - \mu)^{-1} \, n \, |\Gamma| < S$, où $\mu$ est le centroïde de la distribution, $\Gamma$ est la matrice de covariance de la distribution, X est un vecteur de coordonnées du signal inconnu, et T est un opérateur mathématique signifiant que $(X-\mu)$ est un vecteur transposé.

Un dispositif selon l'invention comporte un nombre de neurones tel que décrit dans la revendication 5. Il comprend de préférence un module d'entrée qui fournit des données à l'entrée du réseau de neurones en transformant n termes d'entrée en $n+n(n+1)/2$ termes de sortie représentant les termes d'entrée appelés $x_i$, $x_j$ et leurs produits $x_i \, x_j$, chaque terme de sortie étant amené à un neurone correspondant de la couche d'entrée.

Le dispositif est muni avantageusement d'un lecteur de carte à mémoire et d'une carte à mémoire pour pouvoir enregistrer et retrouver par la suite les données concernant les poids des liaisons et les vecteurs définissant les spécimens, qui ont été obtenues lors de l'apprentissage initial d'une classe.

Un appareil d'authentification de signatures selon l'invention comporte un dispositif selon l'invention, dont l'apprentissage a été réalisé avec des spécimens qui sont des signatures d'une personne déterminée. Un vecteur de données comprend avantageusement une indication concernant la forme de la signature, une indication concernant l'aspect temporel de la création de la signature, et une indication concernant la pression exercée par le moyen d'écriture durant la création de la signature.

La description qui va suivre, en regard des dessins annexés décrivant des exemples non limitatifs fera bien comprendre comment l'invention est réalisée.

La figure 1 représente un réseau neuronal selon l'invention.

La figure 2 illustre des amas d'échantillons répartis en deux classes.

La figure 3 montre comment une classe peut être divisée en distributions locales gaussiennes.

La figure 4 illustre l'analyse selon ses principales composantes d'une distribution locale.

La figure 5 représente un organigramme des étapes mises en oeuvre pour l'établissement des valeurs de synapse.

La description ci-après sera faite en prenant comme exemple l'authentification de signatures, qui consiste en la recherche d'une probabilité qu'un échantillon (une signature à authentifier) appartienne à une classe qui a été définie par d'autres échantillons (un groupe de signatures authentiques appelées "spécimens" qui ont été fournies au préalable). Cependant le dispositif peut aussi s'appliquer à d'autres activités que l'authentification de signatures, comme cela a été indiqué en préambule.

La signature manuscrite est un des moyens les plus habituels pour identifier des personnes. Il existe deux catégories de méthodes et de dispositifs pour l'analyse et la vérification de signatures, c'est à dire pour déterminer si une signature est véritable ou si elle est contrefaite (imitée) :

- les méthodes par examen d'une signature préalablement portée sur un document, considérée comme une forme à analyser.
- les méthodes dans lesquelles le processus d'écriture de la signature est analysé durant la réalisation de la signature.

La première catégorie s'est jusqu'à présent révélée inadaptée pour une vérification automatique et fiable. L'invention concerne donc un appareil basé sur la seconde catégorie.

On utilise une tablette sur laquelle est posé le papier qui reçoit la signature. Cette tablette (qui ne fait pas partie de l'invention) est équipée de capteurs de pression, qui fournissent à chaque instant la position (par exemple coordonnées x, y) et la force d'appui du stylo sur le papier. On enregistre à intervalles réguliers des échantillons de ces diverses grandeurs. L'ensemble des valeurs de chaque grandeur en question constitue les coordonnées d'un vecteur dans un hyper-espace. Ces valeurs sont ensuite normalisées. La normalisation procure des données qui sont indépendantes du temps total mis à réaliser la signature, de sa situation globale sur la tablette, de son inclinaison par rapport à l'horizontale, et de sa dimension globale.

Le dispositif mesure la différence entre une signature B à analyser et les spécimens de signatures A véritables qui ont été enregistrées lors de l'apprentissage.
Cette différence est exprimée par un ensemble de distances d(B,A) :

$$d(B,A) = \left| z_B^*(t) - z_A^*(t) \right| \, ,$$

où $z_B^*(t)$ et $z_A^*(t)$ sont des vecteurs correspondants respectivement à la signature B et à une des signatures A, respectivement. Une telle distance est un scalaire. Il y a autant de distances que de signatures A.

La distance ainsi définie est malheureusement sensible aux fluctuations instantanées de la vitesse d'écriture, qui sont différentes d'une signature à l'autre pour une même personne. On la corrige donc en introduisant une distorsion du temps ("warping function") qui est déterminée par des moyens connus de façon à minimiser d(B,A). L'allure de la distorsion de temps qui a été nécessaire pour minimiser la distance est elle même une donnée signifiante concernant la différence entre deux signatures. Pour plus de détails concernant ces techniques de normalisation et de distorsion du temps on pourra se reporter par exemple à l'article de Yukio Sato et Kiyoshi Kogure intitulé "Online signature verification based on shape, motion, and writing pressure" dans Proceedings of 6th International Conference on Pattern Recognition, München (1982), pages 823, 826.

En fin de compte, on peut retenir trois distances significatives comme distances entre un vecteur représentant une signature A de l'ensemble des signatures vraies et le vecteur représentant une signature B à vérifier. Ces trois distances concernent :

- la position du stylo (normalisée et corrigée par distorsion du temps)
- la pression d'appui du stylo (normalisée et corrigée par distorsion du temps en simultanéité avec la correction concernant la position)

-   la fonction de distorsion du temps elle même.

Ces trois distances constituent elles-mêmes un vecteur à trois dimensions qui exprime la différence entre les signatures. On pourrait aussi retenir en plus, par exemple, le temps global pour réaliser la signature, et/ou n'importe quel autre paramètre, ce qui fournirait un vecteur à quatre dimensions ou plus. Il y a autant de ces vecteurs qu'il y a de spécimens de signatures vraies correspondant à une signature B donnée.

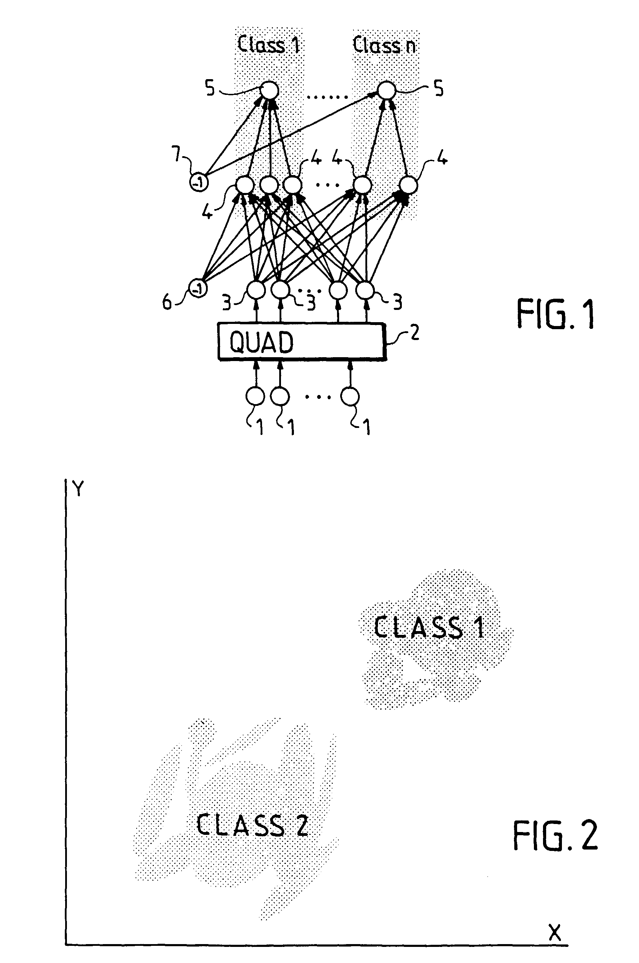

Le dispositif neuronal de la figure 1 traite un vecteur appliqué à des entrées 1. Les coordonnées de ce vecteur sont traitées dans un module d'entrée 2 que l'on appellera "quadrateur" et qui sera décrit plus loin. Ce quadrateur 2 comporte des sorties qui sont reliées aux neurones 3 d'une première couche, dite couche d'entrée, dont les neurones seront appelés neurones "quadratiques". Chaque neurone de cette couche est relié à tous les neurones d'une deuxième couche interne de neurones 4, qu'on appellera neurones "hyper-ellipsoïdes". Les neurones de cette couche sont répartis en groupes dont chacun correspond à une classe de la classification à réaliser, et les neurones d'un groupe sont reliés à un neurone de sortie 5. Enfin deux neurones 6 et 7 dont la valeur est fixée à "-1" sont reliés, l'un à tous les neurones hyper-ellipsoïdes, l'autre à tous les neurones de sortie. Ce sont des neurones à seuil. La valeur "-1" résulte d'une sorte d'habitude lorsqu'on emploie de tels neurones, mais d'autres valeurs seraient également possibles. Le rôle de ces neurones 6 et 7 sera expliqué plus loin.

Puisqu'on ne peut représenter facilement un vecteur à trois dimensions, on a représenté sur les figures 2 à 4 des points qui représentent chacun un vecteur dans un plan (deux dimensions), mais il s'agit de symboles figurant des vecteurs dans un hyper-espace avec un nombre de dimensions quelconque, ce nombre variant selon le problème à résoudre. Chaque point sur une de ces figures représente donc un vecteur représentant les différences entre une signature inconnue et une signature authentique donnée à titre d'exemple.

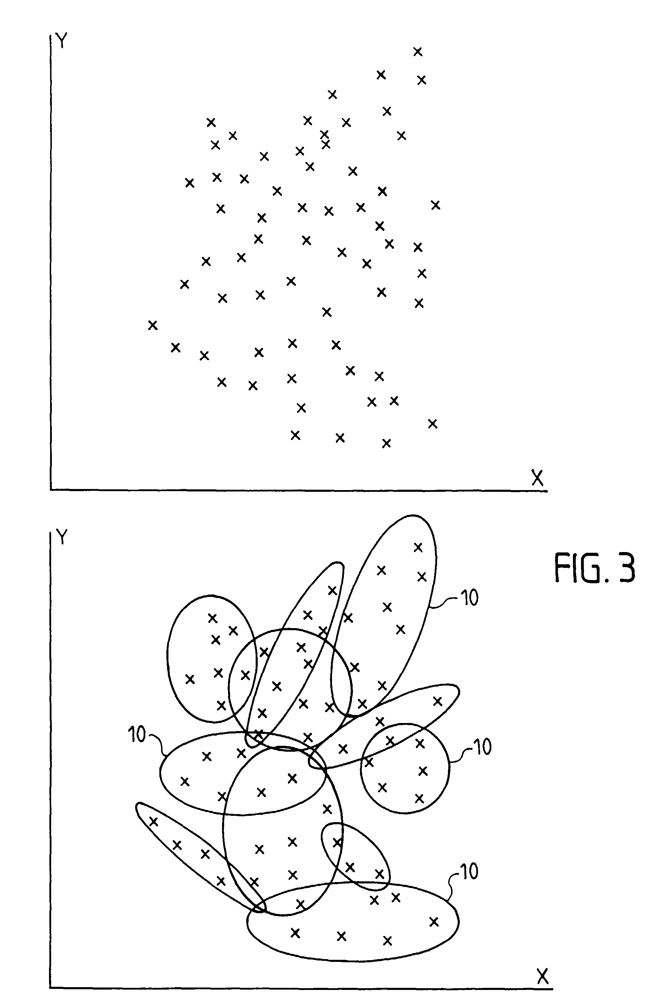

Le dispositif neuronal considère des vecteurs de données se trouvant dans un espace de caractéristiques qui peut être partagé en classes, un tel espace étant illustré par la figure 2, qui représente un amas de points faisant partie d'une classe indiquée "CLASS 1", et un autre amas de points faisant partie d'une autre classe indiquée "CLASS 2". On suppose qu'il existe dans chaque classe des distributions sous-jacentes. La figure 3 illustre ceci en montrant comment, à partir de l'amas de points illustré sur le diagramme du haut, on peut reconnaître sur le diagramme du bas des ensembles de points, chacun des ensembles obéissant au même type de distribution que ses voisins, et on fait l'hypothèse que les distributions sont Gaussiennes, ce qui permet de les modéliser.

Pour clarifier les idées, supposons par exemple qu'on ait dix signatures authentiques disponibles à titre de spécimens, c'est à dire dix vecteurs de données, chacun à trois dimensions. Pour l'instant on n'a pas encore de signature à authentifier, et il s'agit de faire l'apprentissage du dispositif. On calcule toutes les différences deux à deux entre les dix vecteurs, ce qui procure quarante-cinq différences qui sont chacune un vecteur à trois dimensions. Ce sont des ensembles de différences de ce genre qui sont symbolisées par les points sur les figures 2 et 3. Ensuite, pour chacun des quarante-cinq points on calcule les quarante-quatre distances vis-à-vis des autres points, et on prend les k plus petites. La valeur de k est choisie de façon semi-arbitraire au départ puis ajustée au cours des expériences, et peut varier selon les cas. Les points correspondants constituent un ensemble de points sensés répondre à la même loi de distribution. Chacun de ces ensembles est symbolisé par une ellipse sur la figure 3.

Pour faciliter la description plus précise de l'algorithme utilisé par le dispositif, quelques généralités concernant les statistiques vont être rappelées maintenant.

Soit P(X) la probabilité Gaussienne qu'un ensemble X appartienne à la distribution centrée sur $\mu$, avec la matrice de covariance $\Gamma$ :

$$P(X) = \frac{1}{\sqrt{(2\pi)^n}\ \sqrt{|\Gamma|}}\ e^{-\frac{1}{2}(X-\mu)^T\ \Gamma^{-1}\ (X-\mu)}$$

$$\text{soit :} \qquad P(X) = \frac{1}{\sqrt{(2\pi)^n}}\ e^{\frac{1}{2}L(X)}$$

$$\text{avec :} \qquad L(X) = -(X-\mu)^T\ \Gamma^{-1}(X-\mu) - \ln|\Gamma| \qquad\qquad (1)$$

L'exposant T indique un vecteur transposé, et n est la dimension de l'hyper-espace.

Le calcul des termes de l'équation (1) est possible dès que $\mu$ et $\Gamma$ sont connus.

On peut remarquer que la relation L(X) est quadratique. La condition ("de Bayes") pour qu'un ensemble X appartienne à une telle distribution est L(X) < S. Cela donne l'équation d'un hyper-ellipsoïde dans l'espace considéré, L(X) < S étant exprimé par :

$$\sum_{ij} x_i a_{ij} x_j + \sum_i x_i b_i - c < S \qquad\qquad (2)$$

La valeur de S est choisie par l'utilisateur, elle exprime le volume de l'hyper-ellipsoïde.

Le "quadrateur" 2 prévu à l'entrée du réseau de neurones réalise l'opération suivante :

$$(x_1 \ldots x_n) \rightarrow (x_1, \ldots, x_n, x_1 x_1, x_1 x_2, \ldots, x_1 x_n, x_2 x_2, \ldots, x_n x_n)$$

L'homme du métier sait réaliser matériellement un tel quadrateur. Ce quadrateur remplace donc n termes par n + n(n+1)/2 termes fournis chacun sur une sortie. Les n + n(n+1)/2 sorties du quadrateur sont reliées chacune à un des neurones de la première couche de neurones "quadratiques". Ainsi les termes $x_i x_j$ de l'équation (2) sont fournis aux premiers neurones.

La détermination des coefficients $a_{ij}$, $b_i$ et c est faite par identification entre les équations (1) et (2).

Le calcul de L(X) - S requiert finalement le produit "matrice × vecteur" de la sortie du quadrateur par une matrice spécifique, comprenant les coefficients $a_{ij}$, $b_i$. On sait qu'un produit "matrice × vecteur" peut être réalisé par une couche d'un réseau de neurones. Ainsi, les moyens pour le calcul de L(X) - S sont implantés dans la deuxième couche de neurones 4 hyper-ellipsoïdes. Il y a autant de neurones 4 qu'il y a de spécimens d'apprentissage, chacun ayant son entrée reliée aux sorties des neurones quadratiques 3, et les poids des liaisons étant égaux aux coefficients $a_{ij}$, $b_i$ afférents. Les poids entre le neurone 6 de valeur fixe "-1" et les neurones 4 sont proportionnels à la différence S - c définie plus haut. Le neurone 6 prend ainsi en compte la constante c dans l'équation de l'ellipsoïde.

La non linéarité appliquée à L(X)-S par la présence du quadrateur 2 lisse la réponse de la couche des hyper-ellipsoïdes quand X est près de la bordure de l'hyper-ellipsoïde représenté par L(X)-S = 0.

La couche de sortie a pour rôle de donner une réponse (probabilité que la signature fournie à l'entrée soit authentique) en fonction des sorties des neurones internes 4. Un neurone de sortie 5 est relié à tous les neurones internes 4 qui correspondent à des spécimens d'une même classe, ils constituent donc un groupe correspondant à cette classe. Par exemple, dans le cas de l'authentification de signature, il y aurait en principe deux classes, celle des signatures imitées et celle des signatures véritables, donc deux neurones 5 de sortie, l'un délivrant un signal correspondant à la probabilité que la signature soit imitée, et l'autre à la probabilité que la signature soit véritable. En pratique, comme on ne dispose pas en général de spécimens de signatures imitées, on ne peut faire l'apprentissage de la classe des signatures imitées, et il n'y a qu'un seul neurone de sortie qui donne la probabilité que la signature soit véritable.

La couche de sortie réalise une moyenne de tous les neurones internes d'un groupe, corrigée par la sortie du neurone 7. Les poids entre les neurones internes 4 et les neurones de sortie 5 sont tous fixés à UN. Le neurone 7 de valeur fixe "-1" permet de prendre en compte le décompte cumulatif des valeurs de sortie cumulées de tous les neurones internes 4 d'une classe, c'est-à-dire la somme des valeurs de sortie de ces neurones, pondérés par leurs poids synaptiques respectifs. Un neurone de sortie est donc construit comme une sorte de compteur du nombre de neurones hyperellipsoïdes dont la valeur est élevée, et qui compare ce nombre à ce qui sort du neurone 7. A cet effet, le poids synaptique entre le neurone 7 et le neurone de sortie d'une classe déterminée est ajusté de la manière suivante : après la définition des groupes correspondant aux classes, on présente la totalité des spécimens d'apprentissage au réseau et on essaye successivement différents poids entre le neurone 7 et chaque neurone de sortie de façon à trouver les poids respectifs qui minimisent l'erreur moyenne pour chaque classe. Cette procédure peut être soit manuelle soit implantée dans des moyens d'automatisme.

L'apprentissage du réseau consiste donc dans l'estimation de chaque loi locale (une par spécimen de la base d'apprentissage) et dans le calcul des poids synaptiques. Pour le calcul de la distribution locale, une solution adaptative est employée : on recherche des régions selon une métrique Euclidienne et l'on construit ces régions de façon qu'elles contiennent un nombre fixé de spécimens, au lieu de leur imposer une définition topologique, comme cela serait naturel. Autrement dit, au lieu de diviser l'espace en régions arbitraires délimitées par des frontières fixes, on définit comme région un volume contenant un nombre donné de spécimens.

L'apprentissage incrémental du réseau (tel que défini dans l'introduction) comporte l'addition d'un nouveau neurone 4 pour chaque nouveau spécimen, et éventuellement d'un nouveau neurone 5 de sortie s'il y a une nouvelle classe (ceci dans le cas général où il peut y avoir plusieurs classes).

Pour chaque classe sous-jacente $C_m$ dans la base d'apprentissage, les opérations suivantes sont réalisées :

*** Pour chaque spécimen P appartenant à $C_m$ :

* Calcul du voisinage de P à partir des spécimens de la classe $C_m$. Cette région est déterminée par l'algorithme "des k plus proches voisins" :

1/ calcul des distances entre tous les spécimens de la classe $C_m$ et le spécimen P,

2/ classement de ces distances selon leur grandeur,

3/ les k plus proches voisins sont les points de $C_m$ qui donnent les k plus petites distances.

* Calcul des caractéristiques statistiques de la distribution locale : $\Gamma$ (matrice de covariance de la distribution normale dont k échantillons sont les k voisins) et $\mu$ (centroïde de la distribution).

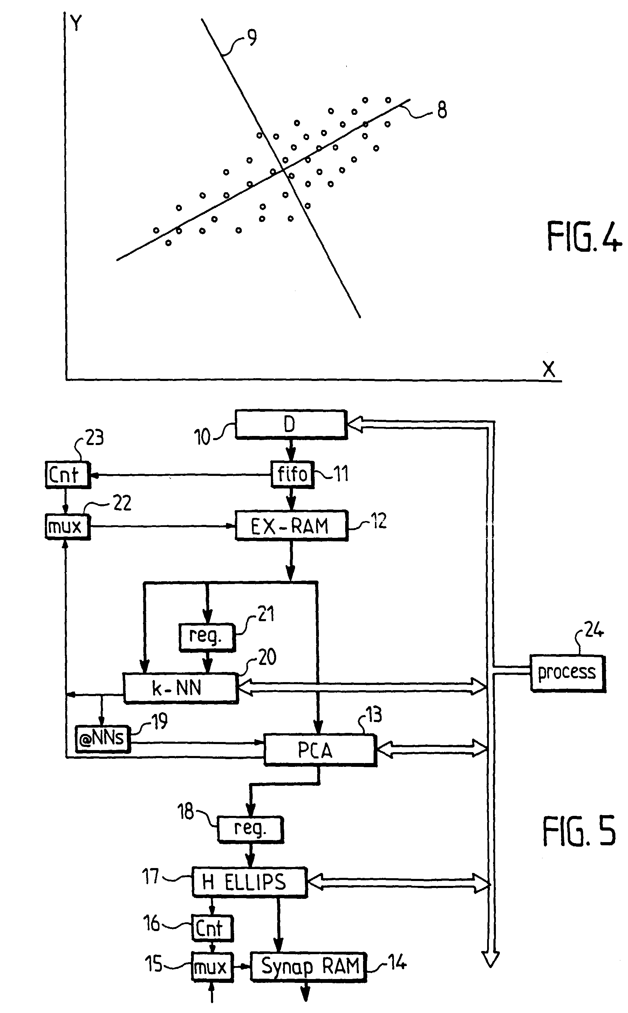

* Calcul des axes principaux de la distribution (voir figure 4, qui donne un exemple dans un plan, avec deux axes principaux 8 et 9, mais il y a en réalité autant d'axes que de dimensions). A cet effet une analyse "des composantes principales" est réalisée. Cette méthode connue donne directement les vecteurs propres de la matrice de covariance de la distribution. Les vecteurs propres donnent les direction des axes principaux. En décrivant la matrice de covariance dans la base définie par ses axes principaux, on fait l'approximation qu'elle est diagonale.

* Calculer les poids entre la sortie du quadrateur et les neurones hyper-ellisoïdes, correspondant au spécimen P. Cette étape réalise le calcul des coefficients $a_{ij}$ et $b_i$.

* Calculer c.

* Mettre à UN le poids synaptique entre les neurones hyper-ellisoïdes correspondant à tous les spécimens de $C_m$ et le neurone de sortie de la classe $C_m$.

* Incrémenter $N_m$ ($N_m$ est le nombre de neurones hyper-ellisoïdes créés jusque là, c'est-à-dire le nombre de spécimens pris en compte).

*** Si on désire la détermination automatique des poids synaptiques entre le neurone 7 et les neurones de sortie :

* pour chaque spécimen P appartenant à $C_m$, et pour les valeurs entières du poids dans la suite $[-N_m,...,+N_m]$, calcul du "décompte cumulatif" défini plus haut correspondant à la classe $C_m$. Calcul de l'erreur sur la valeur de sortie de la classe $C_m$.

*** Conserver la valeur du poids qui minimise l'erreur moyenne sur la classe $C_m$.

Le diagramme d'opérations de la figure 5 illustre le calcul des hyper-ellipsoïdes. Le matériel nécessaire pour la réaliser s'en déduit aisément : on peut voir qu'il nécessite quatre modules fonctionnels :

A partir d'une mémoire principale 10 dans laquelle sont stockées toutes les données disponibles, et via une mémoire tampon 11, une mémoire vive 12 marquée "Ex-RAM" est chargée avec les spécimens disponibles.

* le module 20 marqué "k-NN" charge un spécimen à partir d'un registre 21, réalise la recherche de ses k plus proches voisins et mémorise leur k adresses dans un registre 19.

* le module 13 marqué "PCA" réalise l'analyse des composantes principales sur les k plus proches voisins et calcule les paramètres statistiques. Les coordonnées des axes principaux, le produit des termes de la diagonale de la matrice de covariance et le centroïde de la distribution locale sont alors enregistrés dans un registre 18.

* le module 17 marqué "H ELLIPS" calcule les poids synaptiques et les mémorise dans une mémoire vive 14, marquée "synap RAM".

* le processeur de commande générale 24 marqué "process" commande les communications et le déroulement des tâches. Il commande d'abord le chargement d'une base de données de spécimens dans la mémoire vive 12, puis il remplit le pipeline (k-NN, PCA, H ELLIPS) et il le décharge quand tous les hyper-ellipsoïdes ont été calculés.

Un compteur 23 enregistre le nombre de spécimens qui est chargé dans la mémoire 12, et un multiplexeur 22 permet au module 13 d'accéder directement aux spécimens.

Un compteur 16 enregistre le nombre de classes et le nombre de neurones créés, qui sont fournis par le module 17 à la mémoire 14, et un multiplexeur 15 permet à l'utilisateur d'accéder directement aux poids synaptiques dans la mémoire 14, pour les y lire et les appliquer au réseau de neurones.

Le procédé décrit ci-dessus permet de faire l'apprentissage d'une classe de signatures (celles d'une personne déterminée, basée sur une dizaine de spécimens) en environ une milliseconde, alors que la méthode itérative classique peut demander des heures ou même des jours.

Il est clair qu'une fois que l'apprentissage d'un ensemble de signatures d'une personne est terminé, il n'a pas à être refait à chaque fois qu'une signature de cette même personne doit être vérifiée, il suffit alors de rappeler au système les données obtenues lors de l'apprentissage initial (poids des liaisons et vecteurs définissant les specimens). Ces données peuvent être introduites au moyen d'une carte à mémoire où elles ont été enregistrées lors de l'apprentissage, carte qui est portée par la personne en question, et qui est présentée au dispositif au cours de la procédure de vérification de la signature.

**Revendications**

1. Procédé pour l'apprentissage d'un réseau de neurones, destiné au classement selon une ou plusieurs classes d'un signal inconnu présenté sous la forme d'un vecteur, réseau comportant au moins une couche d'entrée et une couche interne dont les neurones sont reliés d'une couche à l'autre par des connexions ayant chacune un poids, et une couche de sortie dont les neurones sont reliés par des connexions à ceux de la couche interne, l'apprentissage se faisant en créant de nouveau neurones sur la base de spécimens dont on connaît la classe, pour permettre par la suite de déterminer la classe d'un signal particulier dont la classe est inconnue, caractérisé en ce qu'il comprend les étapes suivantes :

   a) considérer, en prenant les spécimens deux par deux, toutes les paires de spécimens, et déterminer la différence entre les deux spécimens dans chacune des paires, les différences ainsi obtenues étant représentées par une pluralité de vecteurs-différence,
   b) considérer un premier de ces vecteurs-différence, appelé "vecteur courant", et déterminer les k vecteurs-différence les plus proches du dit vecteur courant, en créant ainsi un domaine appelé domaine de décision incluant k+1 vecteurs-différence, k étant une valeur prédéterminée,
   c) calculer les caractéristiques statistiques de la distribution pour le groupe de vecteurs-différence du domaine de décision,
   d) introduire un neurone correspondant pour chaque nouveau spécimen dans la couche interne du réseau de neurones,
   e) calculer un poids appelé $a_{ij}$ et un poids appelé $b_i$, $d_{ij}$ et $b_i$ étant les poids de liaison entre la couche d'entrée et la couche interne, pour chacune des connexions entre la couche d'entrée et la couche interne, basés sur la distribution de probabilité du domaine de décision,

   puis prendre un échantillon suivant parmi les vecteurs-différence en tant que nouveau vecteur courant, et répéter les étapes b) à e) jusqu'à ce que le dernier vecteur-différence soit traité.

2. Procédé selon la revendication 1, caractérisé en ce qu'il comprend une étape dans laquelle un neurone est ajouté à la couche de sortie, correspondant à une classe à laquelle est attaché un groupe de neurones de la couche intermédiaire.

3. Procédé selon l'une des revendications 1 ou 2, caractérisé en ce que l'étape c) comprend la détermination de la matrice de covariance des k plus proches voisins, d'un centroïde de la distribution, et des axes principaux d'un ellipsoïde représentant chaque domaine de décision.

4. Procédé selon la revendication 3, caractérisé en ce que les poids sont représentés par $a_{ij}$ $b_i$ dans l'équation :

$$\Sigma_{ij} \, x_j \, a_{ij} \, x_j + \Sigma_i \, x_i \, b_i \, -c < S,$$

où S est un coefficient prédéterminé qui exprime le volume du domaine de décision considéré, les coefficients $a_{ij}$ $b_j$ et c étant déterminés par identification entre cette équation et la relation :

$$(X - \mu)^T \, \Gamma^{-1} \, (X - \mu)^{-1} \, n \, |\Gamma| < S,$$

où $\mu$ est le centroïde de la distribution, $\Gamma$ est la matrice de covariance de la distribution, X est un vecteur de coordonnées du signal inconnu, et T est un opérateur mathématique signifiant que $(X-\mu)$ est un vecteur transposé.

5. Dispositif pour classer des données présentées sous la forme de vecteurs, fournissant une estimation de la probabilité qu'une donnée appartienne à une classe parmi une ou plusieurs classes apprises au moyen de spécimens d'apprentissage, comportant un réseau de neurones avec au moins une couche d'entrée et une couche interne, dont les neurones sont reliés d'une couche à l'autre par des connexions ayant chacune un poids, et une couche de sortie dont les neurones sont reliés par des connexions à ceux de la couche interne, réseau dont l'apprentissage se fait en créant de nouveau neurones sur la base de spécimens dont on connaît la classe, de façon à permettre par la suite de déterminer la classe d'un signal particulier dont la classe est inconnue, caractérisé en ce qu'il comprend des moyens pour considérer, en prenant les spécimens deux par deux, toutes les paires de spécimens, et déterminer la différence entre les deux spécimens dans chacune des paires, les différences ainsi obtenues étant représentées par une pluralité de vecteurs-différence, des moyens pour considérer un premier de ces vecteurs-différence, appelé "vecteur courant", et déterminer les k vecteurs-différence les plus proches du dit vecteur courant, en créant ainsi un domaine appelé domaine de décision incluant k+1 vecteurs-différence, k étant une valeur prédéterminée, des moyens pour calculer les caractéristiques statistiques de la distribution pour le groupe de vecteurs-différence du domaine de décision, des moyens pour introduire un neurone correspondant dans la couche interne du réseau de neurones, des moyens pour calculer un poids appelé $a_{ij}$ et un poids appelé $b_i$ pour $d_{ij}$ et $b_i$ étant les poids de liaison entre la couche d'entrée et la couche interne, pour chacune des connexions entre la couche d'entrée et la couche interne, basés sur la distribution de probabilité du domaine de décision, des moyens pour prendre ensuite un échantillon suivant parmi les vecteurs-différence en tant que nouveau vecteur courant, et pour traiter tous les vecteurs-différence tour à tour.

6.  Dispositif selon la revendication 5, caractérisé en ce qu'il comprend des moyens pour déterminer la matrice de covariance des k plus proches voisins, un centroïde de la distribution, et les axes principaux d'un ellipsoïde représentant chaque domaine de décision, et des moyens pour déterminer des poids synaptiques $a_{ij}$ $b_i$ par identification entre d'une part l'équation:

$$\Sigma_{ij}\, x_i\, a_{ij}\, x_j + \Sigma_i\, x_i\, b_i\, \text{-c} < S,$$

où S est un coefficient prédéterminé qui exprime le volume du domaine de décision considéré, et d'autre part la relation :

$$(X - \mu)^T\, \Gamma^{-1}\, (X - \mu)^{-1}\, n\, |\Gamma| < S,$$

où $\mu$ est le centroïde de la distribution, $\Gamma$ est la matrice de covariance de la distribution, X est un vecteur de coordonnées du signal inconnu, et T est un opérateur mathématique signifiant que $(X-\mu)$ est un vecteur transposé.

7.  Dispositif selon la revendication 5, caractérisé en ce qu'il comprend en outre un module d'entrée qui fournit des données à l'entrée du réseau de neurones en transformant n termes d'entrée en n+n(n+1)/2 termes de sortie représentant les termes d'entrée appelés $x_i$, $x_j$ et leurs produits $[x_i\, x_j]$, chaque terme de sortie étant amené à un neurone correspondant de la couche d'entrée.

8.  Dispositif selon l'une quelconque des revendications 5 à 7, caractérisé en ce qu'il est muni d'un lecteur de carte à mémoire et d'une carte à mémoire pour pouvoir enregistrer et retrouver par la suite les données concernant les poids des liaisons et les vecteurs définissant les spécimens, qui ont été obtenues lors de l'apprentissage initial d'une classe.

9.  Appareil d'authentification de signatures, caractérisé en ce qu'il comporte un dispositif selon la revendication 7, dont l'apprentissage a été réalisé avec des spécimens qui sont des signatures d'une personne déterminée.

10. Appareil d'authentification de signatures selon la revendication 9, caractérisé en ce qu'un vecteur de données comprend des indications concernant la forme de la signature, l'aspect temporel de la création de la signature, et la pression exercée par le moyen d'écriture durant la création de la signature.

**Patentansprüche**

1.  Verfahren für die Lernphase eines neuronalen Netzes, das zur Klassifizierung eines unbekannten, in Form eines Vektors zugeführten Signals nach einer oder mehrerer Klassen bestimmt ist, wobei das Netz wenigstens eine Eingangsschicht und eine interne Schicht umfaßt, deren Neuronen von einer Schicht zur anderen durch Verbindungen verbunden sind, von denen jede ein Gewicht hat, und eine Ausgangsschicht umfaßt, deren Neuronen durch Verbindungen mit denen der internen Schicht verbunden sind, wobei die Lernphase durch Erzeugung von neuen Neuronen auf der Basis von Mustern erfolgt, deren Klasse bekannt ist, um danach die Bestimmung der Klasse eines besonderen Signals zu ermöglichen, dessen Klasse unbekannt ist, <u>dadurch gekennzeichnet,</u> daß es die folgenden Schritte umfaßt:

    a) Betrachtung aller Paare von Mustern unter paarweiser Behandlung der Muster, und Feststellung des Unterschiedes zwischen den beiden Mustern in jedem der Paare, wobei die so erhaltenen Unterschiede durch eine Vielzahl von Differenzvektoren dargestellt werden,

b) Betrachtung eines ersten dieser Differenzvektoren, der als "laufender Vektor" bezeichnet wird, und Bestimmung der k nächsten Differenzvektoren des genannten laufenden Vektors, wobei so ein als Entscheidungsbereich bezeichneter Bereich gebildet wird, der k+1 Differenzvektoren enthält, wobei k ein zuvor festgelegter Wert ist,

c) Berechnung der statistischen Charakteristika der Verteilung für die Gruppe der Differenzvektoren des Entscheidungsbereichs,

d) Einführung eines Neurons für jedes neue Muster in der internen Schicht des neuronalen Netzes,

e) Berechnung eines mit $a_{ij}$ bezeichneten Gewichts und eines mit $b_i$ bezeichneten Gewichts, wobei $a_{ij}$ und $b_i$ die Gewichte der Verbindung zwischen der Eingangsschicht und der internen Schicht sind, für jede der Verbindungen zwischen der Eingangsschicht und der internen Schicht, basierend auf der Wahrscheinlichkeitsverteilung des Entscheidungsbereichs,

danach Behandlung einer folgenden Probe unter den Differenzvektoren als neuen laufenden Vektor und Wiederholung der Schritte b) bis e), bis der letzte Differenzvektor verarbeitet worden ist.

2. Verfahren nach Anspruch 1, <u>dadurch gekennzeichnet,</u> daß es einen Schritt umfaßt, bei dem ein Neuron der Ausgangsschicht hinzugefügt wird, das einer Klasse entspricht, die einer Gruppe von Neuronen der Zwischenschicht zugeordnet ist.

3. Verfahren nach einem der Ansprüche 1 oder 2, <u>dadurch gekennzeichnet,</u> daß der Schritt c) die Bestimmung der Kovarianzmatrix der k nächsten Nachbarn, eines Schwerpunkts der Verteilung und der Hauptachsen eines Ellipsoids umfaßt, das jeden Entscheidungsbereich repräsentiert.

4. Verfahren nach Anspruch 3, <u>dadurch gekennzeichnet,</u> daß die Gewichte durch $a_{ij}$ $b_i$ in der folgenden Gleichung dargestellt werden:

$$\Sigma_{ij}\, x_i a_{ij} x_j + \Sigma_i x_i b_i - c < S$$

wobei S ein zuvor festgelegter Koeffizient ist, der den Rauminhalt des betrachteten Entscheidungsbereich ausdrückt, und die Koeffizienten $a_{ij}$ $b_i$ und c durch Gleichsetzung dieser Gleichung und der Beziehung

$$(X - \mu)^T\ \Gamma^{-1}\ (X - \mu)^{-1}\ n\ |\Gamma| < S$$

bestimmt werden, wobei $\mu$ der Schwerpunkt der Verteilung, $\Gamma$ die Kovarianzmatrix der Verteilung, X ein Koordinatenvektor des unbekannten Signals und T ein mathematischer Operator ist, der angibt, daß (X-$\mu$) ein transponierter Vektor ist.

5. Anordnung zur Klassifizierung von in Form von Vektoren zugeführten Daten, die einen abgeschätzten Wert für die Wahrscheinlichkeit liefert, daß ein Datenelement zu einer oder mehreren der Klassen gehört, die mit Hilfe der Lernmuster erlernt wurden, mit einem neuronalen Netz, das wenigstens eine Eingangsschicht und eine interne Schicht umfaßt, deren Neuronen von einer Schicht zur anderen durch Verbindungen verbunden sind, von denen jede ein Gewicht hat, und eine Ausgangsschicht umfaßt, deren Neuronen durch Verbindungen mit denen der internen Schicht verbunden sind, wobei die Lernphase durch Erzeugung von neuen Neuronen auf der Basis von Mustern erfolgt, deren Klasse bekannt ist, um danach die Bestimmung der Klasse eines besonderen Signals zu ermöglichen, dessen Klasse unbekannt ist, <u>dadurch gekennzeichnet,</u> daß sie Mittel umfaßt zur Betrachtung aller Paare von Mustern unter paarweiser Behandlung der Muster und zur Feststellung des Unterschiedes zwischen den beiden Mustern in jedem der Paare, wobei die so erhaltenen Unterschiede durch eine Vielzahl von Differenzvektoren dargestellt werden, Mittel zur Betrachtung eines ersten dieser Differenzvektoren, der als "laufender Vektor" bezeichnet wird, und zur Bestimmung der k nächsten Differenzvektoren des genannten laufenden Vektors, wobei so ein als Entscheidungsbereich bezeichneter Bereich gebildet wird, der k+1 Differenzvektoren enthält, wobei k ein zuvor festgelegter Wert ist, Mittel zur Berechnung der statistischen Charakteristika der Verteilung für die Gruppe der Differenzvektoren des Entscheidungsbereichs,

Mittel zur Einführung eines Neurons für jedes neue Muster in der internen Schicht des neuronalen Netz, Mittel zur Berechnung eines mit $a_{ij}$ bezeichneten Gewichts und eines mit $b_i$ bezeichneten Gewichts, wobei $a_{ij}$ und $b_i$ die

Gewichte der Verbindung zwischen der Eingangsschicht und der internen Schicht sind, für jede der Verbindungen zwischen der Eingangsschicht und der internen Schicht, basierend auf der Wahrscheinlichkeitsverteilung des Entscheidungsbereichs, und Mittel zur anschließenden Behandlung einer folgenden Probe unter den Differenzvektoren als neuen laufenden Vektor und um alle Vektoren der Reihe nach zu verarbeiten.

6. Anordnung nach Anspruch 5, <u>dadurch gekennzeichnet,</u>
daß sie Mittel zur Bestimmung der Kovarianzmatrix der k nächsten Nachbarn, eines Schwerpunkts der Verteilung und der Hauptachsen eines Ellipsoids umfaßt, das jeden Entscheidungsbereich repräsentiert, umfaßt, sowie Mittel zur Bestimmung der synaptischen Gewichte $a_{ij}$ $b_i$ durch Gleichsetzung erstens der Gleichung:

$$\Sigma_{ij} \, x_i a_{ij} x_j + \Sigma_i x_i b_i - c < S$$

wobei S ein zuvor festgelegter Koeffizient ist, der den Rauminhalt des betrachteten Entscheidungsbereich ausdrückt, und zweitens der Gleichung:

$$(X - \mu)^T \, \Gamma^{-1} \, (x - \mu)^{-1} \, n \, |\Gamma| < S,$$

wobei $\mu$ der Schwerpunkt der Verteilung, $\Gamma$ die Kovarianzmatrix der Verteilung, X ein Koordinatenvektor des unbekannten Signals und T ein mathematischer Operator ist, der angibt, daß $(X-\mu)$ ein transponierter Vektor ist.

7. Anordnung nach Anspruch 5, <u>dadurch gekennzeichnet,</u> daß sie außerdem ein Eingangsmodul umfaßt, das Daten an den Eingang des neuronalen Netzes liefert, indem es n Eingangsterme in $n+n(n+1)/2$ Ausgangsterme umwandelt, die die mit $x_i$, $x_j$ bezeichneten Eingangsterme und deren Produkte $[x_i \, x_j]$ darstellen, wobei jeder Ausgangsterm einem entsprechenden Neuron der Eingangsschicht zugeführt wird.

8. Anordnung nach einem der Ansprüche 5 bis 7, <u>dadurch gekennzeichnet,</u> daß sie mit einem Speicherkarten-Lesegerät und einer Speicherkarte versehen ist, um die Daten speichern und anschließend wieder auslesen zu können, die sich auf die Gewichte der Verbindungen und auf die bei der anfänglichen Lernphase einer Klasse erhaltenen Vektoren beziehen, die die Muster definieren.

9. Unterschriftenprüfungsgerät, <u>dadurch gekennzeichnet,</u> daß es eine Anordnung nach Anspruch 7 umfaßt, bei der die Lernphase mit Mustern durchgeführt wurde, die Unterschriften einer bestimmten Person darstellen.

10. Unterschriftenprüfungsgerät nach Anspruch 9, <u>dadurch gekennzeichnet,</u> daß ein Datenvektor eine Angabe bezüglich der Form der Unterschrift umfaßt, eine Angabe bezüglich des zeitlichen Aspekts bei der Erstellung der Unterschrift und eine Angabe bezüglich des Drucks, der durch das Schreibgerät während des Schreibens der Unterschrift ausgeübt wurde.

**Claims**

1. A learning process of a neural network designed for classifying an unknown signal presented in the form of a vector into one or several classes, which network comprises at least an input layer and an internal layer whose neurons are connected from one layer to the other by means of connections which each have a weight, and an output layer whose neurons are connected to those of the internal layer via connections, which learning takes place through the renewed creation of neurons on the basis of specimens of which the class is known, for rendering possible the subsequent determination of the class of a particular signal of which the class is unknown, characterized in that it comprises the following steps:

   a) a consideration of all pairs of specimens, taking the specimens two by two, and a determination of the difference between the two specimens in each of said pairs, the differences thus obtained being represented by a plurality of difference vectors,

   b) a consideration of a first of these difference vectors, called current vector, and a determination of the k difference vectors which are nearest to said current vector, thus creating a domain called decision domain which includes k+1 difference vectors, k being a predetermined value,

   c) a calculation of the statistical characteristics of the distribution for the group of difference vectors of the decision domain,

d) an introduction of a neuron corresponding to each new specimen into the internal layer of the neural network,

e) a calculation of a weight $a_{ij}$ and a weight $b_i$, $a_{ij}$ and $b_i$ being the connection weights between the input layer and the internal layer, for each of the connections between the input layer and the internal layer, based on the probability distribution of the decision domain,

whereupon a next sample is taken from among the difference vectors as the new current vector, and the steps b) to e) are repeated until the last difference vector has been processed.

2. A method as claimed in claim 1, characterized in that it comprises a step in which a neuron is added to the output layer, corresponding to a class with which a group of neurons of the intermediate layer is associated.

3. A method as claimed in one of the claims 1 and 2, characterized in that the step c) comprises the determination of the covariance matrix of the k nearest neighbors, of a distribution centroid, and of the main axes of an ellipsoid which represents each decision domain.

4. A method as claimed in claim 3, characterized in that the weights are represented by $a_{ij}b_i$ in the equation:

$$\sum_{ij} x_i a_{ij} x_j + \sum_i x_i b_i - c < S$$

in which S is a predetermined coefficient which represents the volume of the decision domain considered, the coefficients $a_{ij}b_i$ and c are determined through identification between this equation and the relation:
$(X-\mu)^T \Gamma^{-1} (X-\mu)^{-1} n \, |\Gamma| < S$, in which $\mu$ is the distribution centroid, $\Gamma$ is the covariance matrix of the distribution, X is a vector with the co-ordinates of the unknown signal, and T is a mathematical operator signifying that $(X-\mu)$ is a transposed vector.

5. A device for classifying data presented in the form of vectors, which device supplies a value which forms an estimate of the probability that a data belongs to a class from one or several classes learned by means of learning specimens, comprising a neural network with at least an input layer and an internal layer whose neurons are connected from one layer to the other by means of connections which each have a weight, and an output layer whose neurons are connected to those of the internal layer via connections, of which network the learning process is carried out through the creation of new neurons on the basis of specimens of which the class is known such that it is subsequently possible to determine the class of a particular signal of which the class is unknown, characterized in that it comprises means for considering all pairs of specimens by taking the specimens two by two, and for determining the difference between the two specimens in each of the pairs, the differences thus obtained being represented by a plurality of difference vectors, means for considering a first of these difference vectors, called current vector, and determining the k difference vectors nearest to said current vector, thus creating a domain called decision domain comprising k+1 difference vectors, k being a predetermined value, means for calculating the statistical characteristics of the distribution for the group of difference vectors of the decision domain, means for introducing a corresponding neuron into the internal layer of the neural network, means for calculating a weight $a_{ij}$ and a weight $b_i$, $a_{ij}$ and $b_i$ being the connection weights between the input layer and the internal layer, for each of the connections between the input layer and the internal layer, based on the probability distribution of the decision domain, and means for subsequently taking a next sample from among the difference vectors as the new current vector and for processing all difference vectors in turn.

6. A device as claimed in claim 5, characterized in that it comprises means for determining the covariance matrix of the k nearest neighbors, a distribution centroid, and the main axes of an ellipsoid representing each decision domain, and means for determining the synaptic weights $a_{ij}b_i$ through identification between on the one hand the equation:

$$\sum_{ij} x_i a_{ij} x_j + \sum_i x_i b_i - c < S$$

in which S is a predetermined coefficient expressing the volume of the decision domain considered, and on the other hand the relation:

$(X-\mu)^T\Gamma^{-1}(X-\mu)^{-1}n \; I\Gamma I < S$, in which $\mu$ is the distribution centroid, $\Gamma$ is the covariance matrix of the distribution, X is a vector with the co-ordinates of the unknown signal, and T is a mathematical operator signifying that $(X-\mu)$ is a transposed vector.

7. A device as claimed in claim 5, characterized in that it in addition comprises an input module which provides data to the input of the neural network by transforming n input terms into n+n(n+1)/2 output terms which constitute the input terms called $x_i$, $x_j$ and their products $[x_i x_j]$, each output term being conducted to a neuron which corresponds to the input layer.

8. A device as claimed in any one of the claims 5 to 7, characterized in that it is provided with a reader for a memory card and with a memory card for the registration and subsequent retrieval of the data relating to the weights of the connections and the vectors defining the specimens obtained during the initial learning process for a class.

9. A device for the verification of signatures, characterized in that it comprises a device as claimed in claim 7 whose learning has been realized with specimens which are the signatures of a given person.

10. A device for the verification of signatures as claimed in claim 9, characterized in that a data vector comprises an indication on the shape of the signature, an indication on the time aspect of the creation of the signature, and an indication on the pressure exerted by the writing means during the creation of the signature.

FIG. 1

FIG. 2

FIG. 3

FIG.4

FIG. 5